# EUROPEAN PATENT APPLICATION

(11) **EP 4 580 226 A1**
(43) Date of publication of application: **02.07.2025**
(21) Application number: 23860686.7
(22) Date of filing: 21.07.2023
(51) Int. Cl.: H04W 4/80, H04W 8/00, H04W 12/02, H04W 12/04, H04L 9/40, H04W 4/23, H04W 4/06

(54) **ELECTRONIC DEVICE, METHOD, AND NON-TRANSITORY COMPUTER-READABLE STORAGE MEDIUM FOR PROCESSING ADVERTISING PACKET BROADCASTED FROM EXTERNAL ELECTRONIC DEVICE IN WIRELESS ENVIRONMENT**

(30) Priority: 01.09.2022 KR 20220110998; 28.09.2022 KR 20220123820
(71) Applicant: Samsung Electronics Co., Ltd., Suwon-si, Gyeonggi-do 16677 (KR)
(72) Inventor: AN, Junhwan, Suwon-si, Gyeonggi-do 16677 (KR); KIM, Suhyun, Suwon-si, Gyeonggi-do 16677 (KR); KIM, Juho, Suwon-si, Gyeonggi-do 16677 (KR)
(74) Representative: HGF
(86) International application number: PCT/KR2023/010622
(87) International publication number: WO 2024/049004

(57) **Abstract**

An electronic device is provided. The electronic device may comprise a display. The electronic device may comprise a communication circuit for Bluetooth low energy (BLE). The electronic device may comprise a processor. The processor may be configured to resolve, at least partly on the basis of an event for initiating a second service, a resolvable private address (RPA) within an advertising packet for a first service by using an identity resolving key (IRK) among multiple IRKs stored in the electronic device before occurrence of the event, the RPA being received through the communication circuit. The processor may be configured to, in response to the resolving, display, through the display within a user interface for the second service, a state of a visual object indicating an external electronic device corresponding to the IRK as a candidate electronic device for providing the second service, together with the electronic device.

## Description

### [Technical Field]

The following descriptions relate to an electronic device, a method, and a non-transitory computer-readable storage medium that process an advertising packet broadcasted from an external electronic device in a wireless environment.

### [Background Art]

Compared to legacy Bluetooth^{®} (or classic Bluetooth), Bluetooth^{®} low energy (BLE) may provide reduced power consumption and provide at least a similar or often greater communication range between connected devices. BLE may be provided on an industrial, scientific, and medical (ISM) radio band.

### [Disclosure]

### [Technical Solution]

An electronic device is provided. The electronic device may comprise a display. The electronic device may comprise communication circuitry for Bluetooth low energy (BLE). The electronic device may comprise a processor. The processor may be configured to, based at least in part on an event for initiating a second service, resolve a resolvable private address (RPA)in an advertising packet for a first service received through the communication circuitry, using an identity resolving key (IRK) from among a plurality of IRKs stored in the electronic device before the event occurs. The processor may be configured to, in response to the resolving, display, via the display, in a user interface (UI) for the second service, a visual object of a state, the state indicating an external electronic device corresponding to the IRK as a candidate electronic device for providing the second service with the electronic device.

A method executed in an electronic device comprising a display and communication circuitry for Bluetooth low energy (BLE) is provided. The method may comprise, based at least in part on an event for initiating a second service, resolving a resolvable private address (RPA)in an advertising packet for a first service received through the communication circuitry, using an identity resolving key (IRK) from among a plurality of IRKs stored in the electronic device before the event occurs. The method may comprise, in response to the resolving, displaying, via the display, in a user interface (UI) for the second service, a visual object of a state, the state indicating an external electronic device corresponding to the IRK as a candidate electronic device for providing the second service with the electronic device.

A non-transitory computer readable storage medium storing one or more programs is provided. The one or more programs comprising instructions which, when executed by a processor of an electronic device including a display and communication circuitry for Bluetooth low energy (BLE), cause the electronic device to, based at least in part on an event for initiating a second service, resolve a resolvable private address (RPA) in an advertising packet for a first service received through the communication circuitry, using an identity resolving key (IRK) from among a plurality of IRKs stored in the electronic device before the event occurs. The one or more programs may comprise instructions which, when executed by the processor of the electronic device, cause the electronic device to, in response to the resolving, display, via the display, in a user interface (UI) for the second service, a visual object of a state, the state indicating an external electronic device corresponding to the IRK as a candidate electronic device for providing the second service with the electronic device.

### [Description of the Drawings]

FIG. 1 illustrates an environment including an exemplary electronic device.
FIG. 2 is a simplified block diagram of an exemplary electronic device.
FIG. 3 illustrates an example of an operation of an exemplary electronic device that processes an advertising packet broadcasted from an exemplary external electronic device.
FIG. 4 illustrates an example of a user interface displayed in an exemplary electronic device.
FIG. 5 illustrates an example of an operation of an exemplary electronic device that identifies whether a resolvable private address (RPA) in a second advertising packet is resolved.
FIG. 6 illustrates an example of an operation of an exemplary electronic device for broadcasting a third advertising packet.
FIG. 7 illustrates an example of changing a state of a visual object in a user interface displayed in an exemplary electronic device based on a user input.
FIG. 8 illustrates an example of a message displayed in an exemplary external electronic device.
FIG. 9 illustrates an example of an operation of an exemplary electronic device that identifies whether a second advertising packet is received during a reference time interval.
FIG. 10 illustrates an example of a change in displaying of a user interface displayed in an exemplary electronic device.
FIG. 11 illustrates an example of an operation of an exemplary electronic device that processes an advertising packet broadcasted from an exemplary external electronic device using a first software application and a second software application.
FIG. 12 illustrates an example of an operation of an exemplary external electronic device that obtains an advertising packet for a service provided through a second software application using a first software application.
FIG. 13 is a block diagram of an electronic device in a network environment according to various embodiments.

### [Mode for Invention]

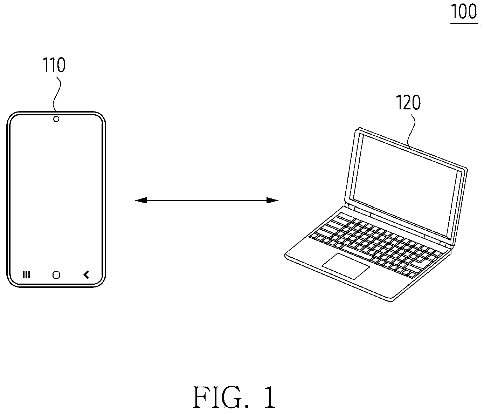

Referring to FIG. 1, an environment 100 may include an electronic device 110 and an external electronic device 120. Although FIG. 1 illustrates an example in which the environment 100 includes the electronic device 110 and the external electronic device 120, this is for convenience of explanation. The environment 100 may include a plurality of external electronic devices including the external electronic device 120.

The electronic device 110 may communicate wirelessly with the external electronic device 120.

For example, the electronic device 110 may receive an advertising packet broadcasted from an external electronic device 120 before a connection with the external electronic device 120 is established. For example, the connection with the external electronic device 120 may be a connection for Bluetooth low energy (BLE) or legacy Bluetooth. For example, the advertising packet broadcasted from the external electronic device 120 may be used for a first service. For example, the electronic device 110 may identify that the advertising packet is for the first service based on advertising data in the advertising packet broadcasted from the external electronic device 120.

For example, the electronic device 110 may broadcast a first advertising packet before the connection with the external electronic device 120 is established. The first advertising packet may be received by the external electronic device 120. For example, the first advertising packet may indicate the electronic device 110 for a second service different from the first service. For example, the first advertising packet may be broadcasted from the electronic device 110 so that another electronic device (e.g., external electronic device 120) may search for the electronic device 110 for the second service. For example, the external electronic device 120 may identify that the first advertising packet is for the second service based on advertising data in the first advertising packet.

For example, the external electronic device 120 may broadcast a second advertising packet in response to the first advertising packet. For example, the second advertising packet may be broadcasted from the external electronic device 120 to inform that the electronic device 110 is searched for the second service.

For example, the electronic device 110 may receive the second advertising packet from the external electronic device 120. For example, the electronic device 110 may display, based on the second advertising packet, through a display of the electronic device 110, a visual object indicating the external electronic device 120 as a target electronic device for providing the second service with the electronic device 110, in a user interface of a software application for the second service. For example, the visual object may be displayed, on a condition that the external electronic device 120 receives the first advertising packet broadcasted from the electronic device 110 and the electronic device 110 receives the second advertising packet broadcasted from the external electronic device 120 in response to the first advertising packet. For example, an average time consumed for the displaying of the visual object in accordance with this condition may be a first time.

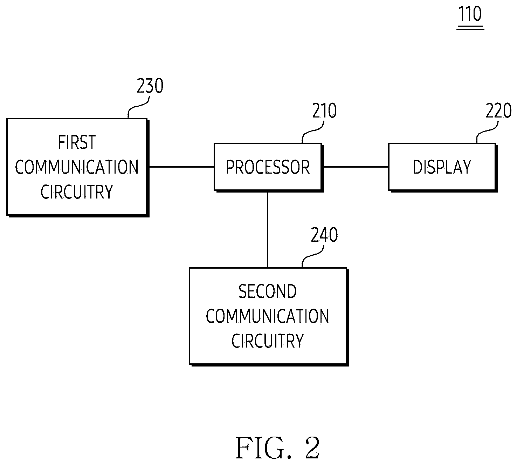

For example, the external electronic device 120 providing the first service may have a capability capable of providing the second service with the electronic device 110. For example, since the electronic device 110 receiving the advertising packet for the first service from the external electronic device 120 may indicate that the external electronic device 120 is relatively close to the electronic device 110, a probability that the electronic device 110 provides the second service with the external electronic device 120 may be higher than a probability that the electronic device 110 provides the second service with another external electronic device distinct from the external electronic device 120. For example, in accordance with this assumption, the electronic device 110 may execute an operation to change the average time consumed for the displaying of the visual object to a second time shorter than the first time. For example, the operation may be executed by processing the advertising packet for the first service. For example, the electronic device 110 may include components for executing the operation. The components may be exemplified through FIG. 2.

FIG. 2 is a simplified block diagram of an exemplary electronic device.

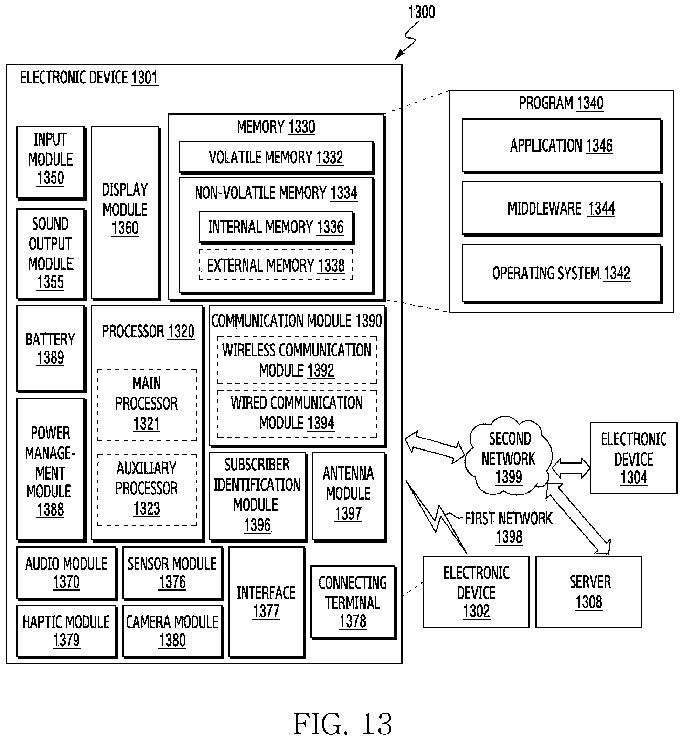

Referring to FIG. 2, the electronic device 110 may include at least a portion of an electronic device 101 of FIG. 13. For example, the electronic device 110 may include a processor 210, a display 220, and first communication circuitry 230. For example, the electronic device 110 may further include second communication circuitry 240.

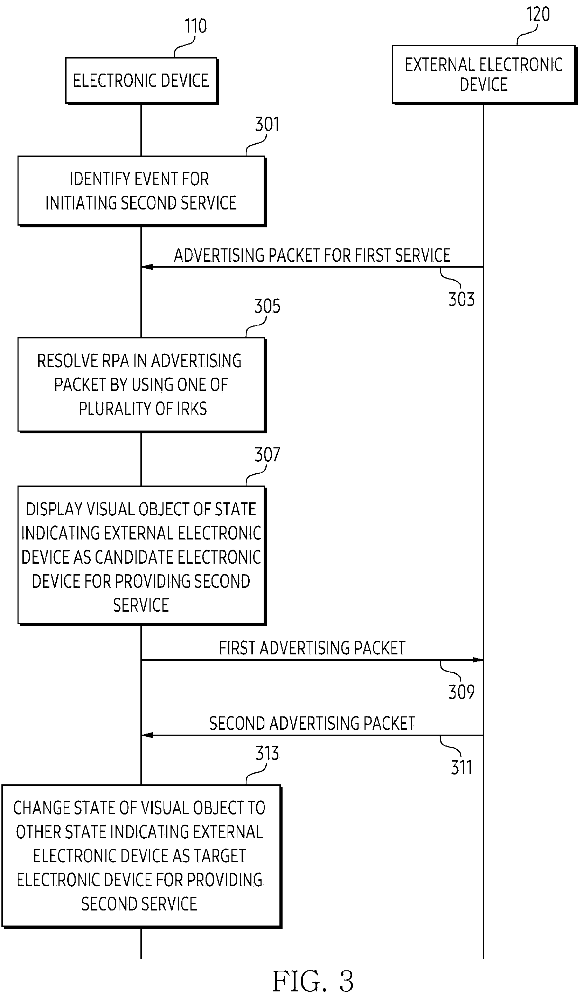

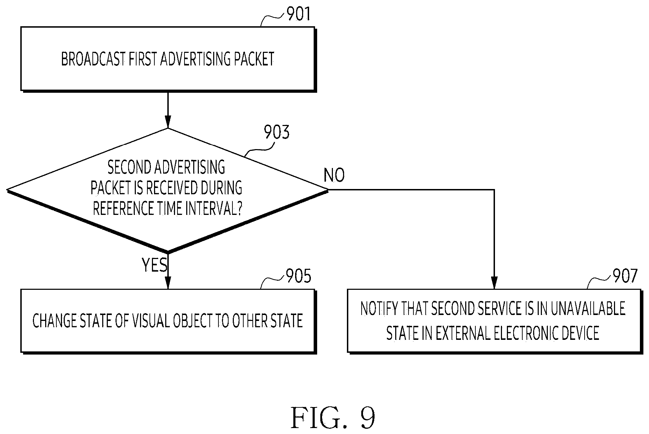

For example, the processor 210 may include at least a portion of a processor 1320 of FIG. 13. For example, the processor 210 may be configured to execute at least a portion of operations of the electronic device 110 exemplified through FIGS. 3 to 7 and at least a portion of operations of the electronic device 110 exemplified through FIGS. 9 to 12.

For example, the display 220 may include at least a portion of a display module 1360 of FIG. 13.

For example, the first communication circuitry 230 may include at least a portion of a wireless communication module 1392 of FIG. 13. For example, the first communication circuitry 230 may include communication circuitry for a Bluetooth low energy (BLE) communication technique and/or a legacy Bluetooth communication technique.

For example, the second communication circuitry 240 may include at least a portion of the wireless communication module 1392 of FIG. 13. For example, the second communication circuitry 240 may include communication circuitry for a cellular communication technique and/or a Wi-Fi communication technique.

The components of the electronic device 110 illustrated in FIG. 2 may be used to execute operations to be exemplified below.

Referring back to FIG. 1, the electronic device 110 may change the average time to the second time by resolving a resolving private address (RPA) in the advertising packet for the first service received from the external electronic device 120. The resolving the RPA in the advertising packet for the first service may be exemplified through FIG. 3.

FIG. 3 illustrates an example of an operation of an exemplary electronic device that processes an advertising packet broadcasted from an exemplary external electronic device.

Referring to FIG. 3, in operation 301, the electronic device 110 may identify an event for initiating a second service.

For example, the second service may include transmitting information regarding a content in the electronic device 110 from the electronic device 110 to one or more devices around the electronic device 110. In the illustration of FIG. 3, the one or more devices may include the external electronic device 120. For example, the content in the electronic device 110 may include a content that is at least temporarily stored in the electronic device 110. For example, the second service may be referred to as a sharing service or a quick sharing service in terms of sharing the content to the one or more devices. However, it is not limited thereto.

For example, the second service may indicate a service using an advertising packet to search for another device (e.g., the external electronic device 120). For example, the second service may include a service that shares music (or audio) played in the electronic device 110 with another device (e.g., Bluetooth speaker, earbuds, or in-vehicle speaker) or outputs it through the other device. For example, the music may be outputted through a speaker of the other device. For example, the second service may include a service of sharing information on a quality of service (QoS) of wireless fidelity (Wi-Fi) associated with the electronic device 110 and/or another device. For example, the second service may include a service for searching for an input device. For example, the input device may be used for controlling of the electronic device 110 or another electronic device. For example, the second service may include a service for searching for another device, capable of providing a mobile spot, around the electronic device 110. However, it is not limited thereto.

For example, the event may include executing a software application used to provide the second service. For example, the electronic device 110 may identify the event, based on an input to an executable object corresponding to the software application (e.g., a touch input contacted on the executable object). For example, the executable object may be displayed within a wallpaper displayed through the display 220. For example, the executable object may be displayed within a window that is partially superimposed on a user interface of another software application displayed through the display 220. However, it is not limited thereto.

For example, the event may include changing a state of the software application. For example, the event may include a change in the state of the software application from a background state to a foreground state. However, it is not limited thereto.

For example, the event may include receiving a set input. For example, the event may include receiving a signal corresponding to the set input from another external electronic device through the first communication circuitry 230 or the second communication circuitry 240. For example, the event may include receiving the set input having a set pattern through the display 220. For example, the event may include receiving the set input through a physical button exposed through a portion of a housing of the electronic device 110. However, it is not limited thereto.

In operation 303, the external electronic device 120 may broadcast an advertising packet for the first service.

For example, the first service may include informing, indicating, or guiding a state of the external electronic device 120 to one or more devices around the external electronic device 120. For example, in the illustration of FIG. 3, the one or more devices may include the electronic device 110. For example, the first service may include providing, through communication between the external electronic device 120 and the one or more devices around the external electronic device 120, a user environment that integrates at least a portion of capability of the external electronic device 120 and at least a portion of capability of the one or more devices. For example, the first service may include executing, in the one or more devices, a software application executed in the external electronic device 120 and maintaining, in the one or more devices, an execution state of the software application in the external electronic device 120. For example, the first service may be referred to as a continuation service in terms of maintaining the execution state of the software application of the external electronic device 120 within the one or more devices. However, it is not limited thereto.

For example, the first service may indicate a service using an advertising packet for searching for another device (e.g., the external electronic device 120). For example, the first service may include a service that shares music (or audio) played in the electronic device 110 with another device or outputs it through the other device. For example, the music may be outputted through a speaker of the other device. For example, the first service may include a service that shares information on a quality of service (QoS) of wireless fidelity (Wi-Fi) associated with the electronic devices 110 and/or another device. For example, the first service may include a service for searching for an input device. For example, the input device may be used for controlling of the electronic device 110 or another electronic device. For example, the first service may include a service for searching for another device, capable of providing a mobile spot, around the electronic device 110. However, it is not limited thereto.

For example, the first service may be distinct from the second service. For example, in case that the first service is a service outputting music through another device, the second service may be a service for searching for the input device. However, it is not limited thereto.

For example, the advertising packet for the first service may include address information of the external electronic device 120. For example, the address information may include a resolving private address (RPA) of the external electronic device 120. For example, the RPA of the external electronic device 120 may be randomly generated or obtained. For example, the RPA of the external electronic device 120 may be obtained or generated based on an identity resolving key (IRK) of the external electronic device 120. For example, the RPA of the external electronic device 120 may be obtained or generated for security. For example, the RPA of the external electronic device 120 may be obtained or generated to protect or hide a real address (e.g., medium access control (MAC) address) of the external electronic device 120. For example, the RPA of the external electronic device 120 may be resolved based on the IRK of the external electronic device 120. However, it is not limited thereto.

For example, the advertising packet for the first service may include advertising data indicating the first service. For example, the advertising data may be identified by a device (e.g., the electronic device 110 of FIG. 3) that receives the advertising packet for the first service. For example, the device receiving the advertising packet for the first service may recognize or identify that the advertising packet is for the first service based on the advertising data. However, it is not limited thereto.

The electronic device 110 may receive the advertising packet for the first service. For example, the electronic device 110 located within a coverage of the external electronic device 120 may receive the advertising packet, for the first service, broadcasted from the external electronic device 120. For example, the electronic device 110 may identify that the advertising packet is associated with the first service, based on the advertising data in the advertising packet broadcasted from the external electronic device 120.

For example, the advertising packet for the first service may be received before a connection between the electronic device 110 and the external electronic device 120 is established. For example, the connection may include pairing between the electronic device 110 and the external electronic device 120. For example, the connection may include bonding between the electronic device 110 and the external electronic device 120. However, it is not limited thereto.

Although FIG. 3 illustrates an example in which operation 303 is executed after operation 301 is executed, this is for convenience of explanation. For example, operation 301 may be executed after operation 303 is executed. For example, at least a portion of operation 301 may be executed in parallel with at least a portion of operation 303.

In operation 305, based at least in part on the event, the electronic device 110 may resolve the RPA in the advertising packet for the first service received through the first communication circuitry 230 by using one of a plurality of IRKs stored in the electronic device 110 before the event occurs.

For example, information on the plurality of IRKs may be received from a server before the event occurs. For example, the information may be received through the second communication circuitry 240. However, it is not limited thereto.

For example, the server may be a device for managing devices associated with the electronic device 110. For example, the server may be a device providing a service associated with a connection between the electronic device 110 and another electronic device. For example, the server may provide the service, based on a user account of the electronic device 110 and a user account of the other electronic device, registered in the server.

For example, a user account used for the external electronic device 120 may correspond to a user account used for the electronic device 110. For example, the user account used for the external electronic device 120 may be identical to the user account used for the electronic device 110. For example, the user account used for the external electronic device 120 is different from the user account used for the electronic device 110, but the user account used for the external electronic device 120 may be a user account linked within the server with the user account used for the electronic device 110. For example, since the user account used for the external electronic device 120 corresponds to the user account used for the electronic device 110, the server may transmit, to the electronic device 110, the information on the plurality of IRKs including an IRK of the external electronic device 120. For example, the electronic device 110 may receive the information.

For example, since the RPA in the advertising packet for the first service above is an RPA of the external electronic device 120, the IRK used to resolve the RPA from among the plurality of IRKs may be an IRK of the external electronic device 120. For example, the IRK of the external electronic device 120 is obtained after pairing with the external electronic device 120 is established, but the electronic device 110 stores the plurality of IRKs before the event occurs, so the electronic device 110 may resolve the RPA in the advertising packet for the first service based on the IRK from among the plurality of IRKs before the pairing with the external electronic device 120 is established.

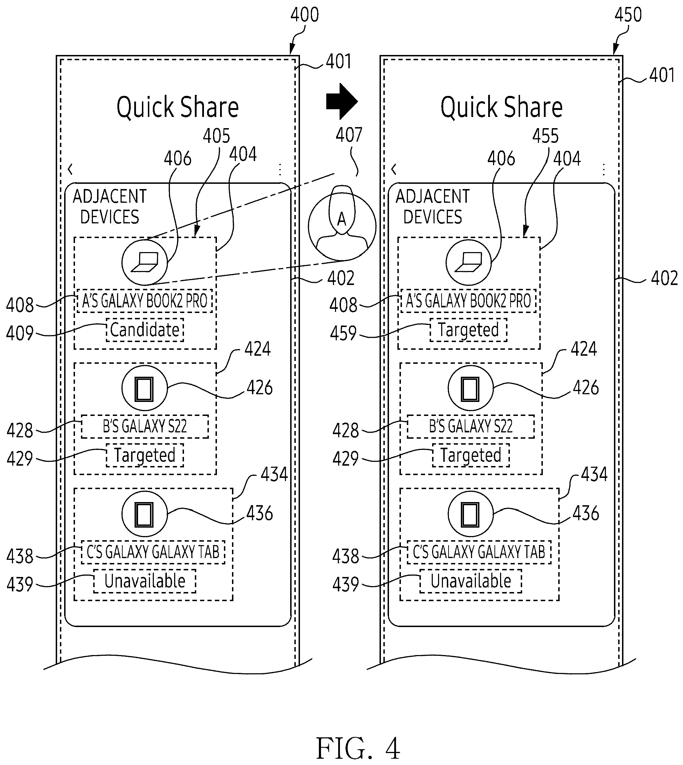

In operation 307, based on or in response to the resolving, the electronic device 110 may display, via the display 220, in a user interface for the second service, a visual object of a state, the state indicating an external electronic device 120 corresponding to the IRK as a candidate electronic device for providing the second service with the electronic device 110. The visual object of the state may be exemplified through FIG. 4.

FIG. 4 illustrates an example of a user interface displayed in an exemplary electronic device.

Referring to FIG. 4, the electronic device 110 may display a user interface 401 of the software application for the second service, based at least in part on the event. For example, the electronic device 110 may display the visual object 404 within a field 402 of the user interface 401 including a list for displaying adjacent devices around the electronic device 110, as in a state 400, based on the resolving. For example, the visual object 404 displayed in the state 400 may be in a state 405. For example, the state 405 may indicate an external electronic device 120 corresponding to the IRK as a candidate electronic device for providing the second service with the electronic device 110.

For example, the visual object 404 of the state 405 may include a visual element 406 having a shape corresponding to a shape of the external electronic device 120. For example, the representation of the visual element 406 may be variously set. For example, the visual element 406 may be replaced with a visual element 407 representing a user of the external electronic device 120. However, it is not limited thereto.

For example, the visual object 404 of the state 405 may include text 408 indicating a device name or type of the external electronic device 120. For example, the text 408 may be replaced with another visual element indicating the device name or type of the external electronic device 120. However, it is not limited thereto.

For example, the visual object 404 of the state 405 may include text 409 indicating that the external electronic device 120 is the candidate electronic device. For example, the text 409 may be replaced with another visual element indicating that the external electronic device 120 is the candidate electronic device. However, it is not limited thereto.

For example, the visual object 404 of the state 405 may be displayed after the advertising packet for the first service is received in operation 303. For example, the visual object 404 of the state 405 may be displayed before operation 311, which will be exemplified below, is executed. For example, since the visual object 404 of the state 405 is displayed before operation 311 is executed, the average time spent to display the visual object 404 of the state 405 may be the second time shorter than the first time. For example, the electronic device 110 may increase or enhance a response speed for providing information associated with the second service.

For example, the field 402 may further include a visual object 424 and/or a visual object 434.

For example, the visual object 424 may be displayed in a state of receiving a second advertising packet, which will be exemplified in operation 311, from another external electronic device distinct from the external electronic device 102. For example, the visual object 424 may include a visual element 426 having a shape corresponding to a shape of the other external electronic device. For example, the visual object 424 may include text 428 indicating a device name or type of the other external electronic device. For example, the visual object 424 may include text 429 indicating that the other external electronic device is a device providing the second advertising packet. For example, the visual object 424 may include text 429 because it indicates the other external electronic device broadcasting the second advertising packet, unlike the external electronic device 120 indicated by the visual object 404 of the state 405.

For example, the visual object 434 may indicate another external electronic device that previously provided the second service with the electronic device 110. For example, the other external electronic device may be a device that is currently communicatively spaced apart from the electronic device 110. For example, the visual object 434 may be displayed in a state that the electronic device 110 is located outside a coverage of the other external electronic device. For example, the visual object 434 may include a visual element 436 having a shape corresponding to a shape of the other external electronic device. For example, the visual object 434 may include text 438 indicating a device name or type of the other external electronic device. For example, the visual object 434 may include text 439 indicating that the other external electronic device is not currently searched or that the other external electronic device is unavailable for the second service.

Although not illustrated in FIG. 4, the visual object 424 may be visually highlighted with respect to the visual object 404 and the visual object 434 of the state 405. For example, since the visual object 424 is a device broadcasting the second advertising packet, the visual object 424 may be visually highlighted. However, it is not limited thereto.

The visual object 404, exemplified above and to be exemplified below, may be replaced with an indication of another type that is distinct from a visual indication. For example, the electronic device 110 may output an audio signal that indicates an external electronic device 120 corresponding to the IRK as a candidate electronic device for providing the second service with the electronic device 110. For example, the electronic device 110 may output a haptic notification that indicates an external electronic device 120 corresponding to the IRK as a candidate electronic device for providing the second service with the electronic device 110. For example, the electronic device 110 may transmit, to another electronic device distinct from the electronic device 110 and the external electronic device 120, a signal for indicating an external electronic device 120 corresponding to the IRK as a candidate electronic device for providing the second service with the electronic device 110. For example, the signal may cause the other electronic device to provide a visual object, such as the visual object 404, the audio signal, and/or the haptic notification. However, it is not limited thereto.

Referring back to FIG. 3, in operation 309, the electronic device 110 may broadcast, through the first communication circuit 230, a first advertising packet indicating the electronic device 110 for the second service, based on the event. For example, the first advertising packet may be broadcasted for the second service. For example, the first advertising packet for the second service may be broadcasted to search for a counter device of the electronic device 101. For example, the electronic device 110 may broadcast the first advertising packet so that devices around the electronic device 110 search the electronic device 110 for the second service. For example, the first advertising packet may be broadcasted from the electronic device 110 to inform that the second advertising packet will be broadcasted in response to receiving of the first advertising packet. However, it is not limited thereto.

For example, the external electronic device 120 may receive the first advertising packet.

Although FIG. 3 illustrates an example in which operation 309 is executed after operation 303 to operation 307 are executed, this is for convenience of explanation. Operation 309 may be executed on a condition of executing operation 301. For example, operation 309 may be executed independently of executing operation 303 to operation 307. For example, unlike the illustration of FIG. 3, operation 309 may be executed before operation 303, operation 305, or operation 307 is executed. For example, at least a portion of operation 309 may be executed in parallel with at least a portion of operation 303, operation 305, and/or operation 307. However, it is not limited thereto.

In operation 311, the external electronic device 120 may broadcast the second advertising packet in response to the first advertising packet. For example, the second advertising packet may be an acknowledgement packet indicating that the first advertising packet is received. For example, the second advertising packet may indicate searching for the electronic device 110 for the second service. For example, the second advertising packet may include advertising data indicating that the first advertising packet is received or indicating that the second advertising packet is associated with the second service. For example, the second advertising packet may include an RPA identical to or corresponding to the RPA in the advertising packet for the first service.

For example, the electronic device 110 may receive the second advertising packet. For example, the second advertising packet may be received while the visual object of the state (e.g., the visual object 404 of the state 405 of FIG. 4) is displayed.

In operation 313, the electronic device 110 may change the state of the visual object to another state indicating the external electronic device 120 as a target electronic device for providing the second service with the electronic device 110, based at least in part on the second advertising packet.

For example, referring to FIG. 4, the electronic device 110 may change the state 400 to a state 450 based at least in part on the second advertising packet. For example, in the state 450, the electronic device 110 may display a visual object 404 of another state 455 changed from the state 405.

For example, unlike the visual object 404 of the state 405, the visual object 404 of the other state 455 may include text 459 indicating that the external electronic device 120 is the target electronic device. For example, the text 409 may be replaced with the text 459 in accordance with a change from the state 405 to the other state 455. For example, the text 459 may be replaced with another visual element indicating that the external electronic device 120 is the target electronic device. However, it is not limited thereto.

FIG. 4 illustrates an example in which a state of the visual object 404 is changed from the state 405 to the other state 455 in accordance with the change from the state 400 to the state 450, but the change of the visual object 405 from the state 405 to the other state 455 may be implemented differently. For example, when the user interface 401 includes a first field for a candidate electronic device for the second service and a second field for a target electronic device for the second service, distinct from the first field, the electronic device 110 may change the state 400 to the state 450 by moving the visual object 404 from the first field to the second field based at least in part on the second advertising packet. In this case, the text 409 and the text 459 may not be displayed. However, it is not limited thereto.

Referring back to FIG. 3, processing associated with the visual object may be executed through various methods exemplified below.

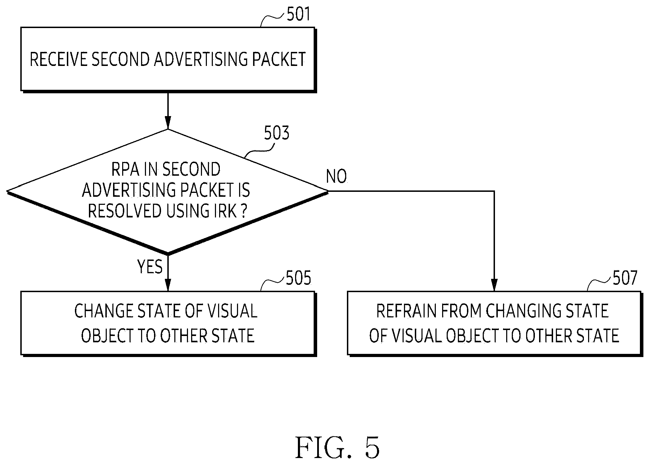

For example, at least a portion of the various methods may be associated with processing of an RPA in the second advertising packet. For example, the at least a portion of the various methods may be exemplified through FIG. 5.

FIG. 5 illustrates an example of an operation of an exemplary electronic device that identifies whether a resolvable private address (RPA) in a second advertising packet is resolved.

Referring to FIG. 5, in operation 501, the electronic device 110 may receive the second advertising packet broadcasted from the external electronic device 120 in response to the first advertising packet. For example, operation 501 may correspond to operation 311 of FIG. 3.

In operation 503, based on the reception, the electronic device 110 may identify whether the RPA in the second advertising packet is resolved using the IRK used to resolve the RPA in the advertising packet for the first service. For example, operation 503 may be executed to identify whether the second advertising packet is broadcasted from the external electronic device 120. For example, the electronic device 110 may recognize that the second advertising packet is broadcasted from the external electronic device 120 on a condition that the RPA in the second advertising packet is resolved using the IRK, and recognize that the second advertising packet is broadcasted from another electronic device distinct from the external electronic device 120 on a condition that the RPA in the second advertising packet is not resolved using the IRK.

For example, the electronic device 110 may execute operation 505 based on the RPA in the second advertising packet resolved using the IRK, and execute operation 507 based on the RPA in the second advertising packet, which is resolved using another IRK of the plurality of IRKs, or not resolved using the IRK, the other IRK distinct from the IRK.

In operation 505, the electronic device 110 may change the state of the visual object to the other state, based on identifying that the RPA in the second advertising packet is resolved using the IRK. For example, the electronic device 110 may change the state 400 of FIG. 4 to the state 450. However, it is not limited thereto.

For example, when the electronic device 110 receives, from the server, before the event occurs, other information indicating whether the second service is enabled or disabled in each of a plurality of external electronic devices corresponding to each of the plurality of IRKs, the electronic device 110 may change the state of the visual object to the other state based on the RPA in the second advertising packet resolved using the IRK and the other information indicating that the second service is enabled in the external electronic device 120. However, it is not limited thereto.

For example, when the advertising packet for the first service received in operation 303 includes information indicating whether the second service is enabled or disabled in the external electronic device 120, the electronic device 110 may change the state of the visual object to the other state based on the RPA in the second advertising packet resolved using the IRK and the information indicating that the second service is enabled in the external electronic device 120.

For example, when the second advertising packet includes information indicating whether the second service is enabled or disabled in the external electronic device 120, the electronic device 110 may change the state of the visual object to the other state based on the RPA in the second advertising packet resolved using the IRK and information in the second advertising packet indicating that the second service is enabled in the external electronic device 120.

In operation 507, the electronic device 110 may refrain from changing the state of the visual object to the other state, based on identifying that the RPA in the second advertising packet is not resolved using the IRK, or identifying that the RPA in the second advertising packet is resolved using the other IRK distinct from the IRK. For example, the electronic device 110 may bypass or skip changing the state of the visual object to the other state. For example, the electronic device 110 may maintain the state of the visual object. For example, the electronic device 110 may cease displaying the visual object. For example, the electronic device 110 may change the state of the visual object to a state indicating that providing the second service together with the external electronic device 120 is disabled or unavailable. However, it is not limited thereto.

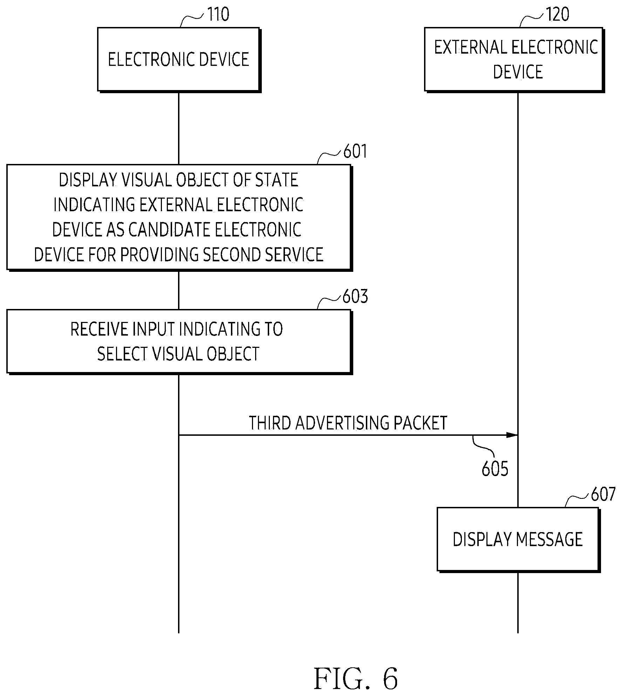

Referring back to FIG. 3, at least a portion of the various methods may be associated with an input for the visual object. For example, the at least a portion of the various methods may be exemplified through FIG. 6.

FIG. 6 illustrates an example of an operation of an exemplary electronic device for broadcasting a third advertising packet.

Referring to FIG. 6, in operation 601, the electronic device 110 may display the visual object of the state indicating the external electronic device 120 as the candidate electronic device for providing the second service. For example, operation 601 may correspond to operation 307 of FIG. 3.

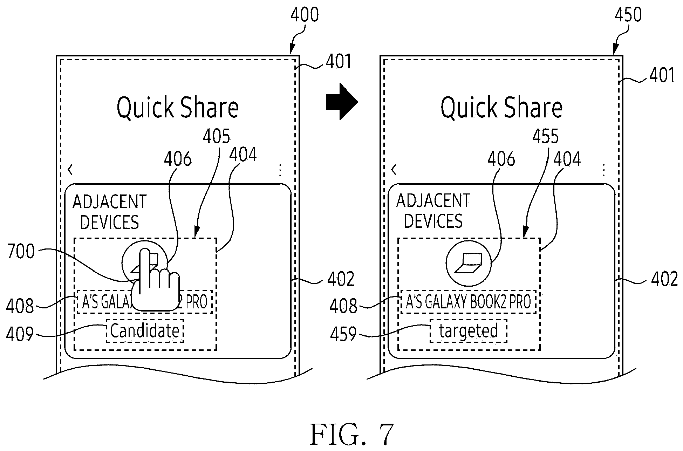

In operation 603, the electronic device 110 may receive an input indicating to select the visual object of the state. The input may be a touch input on the visual object. The touch input may be exemplified through FIG. 7.

FIG. 7 illustrates an example of changing a state of a visual object in a user interface displayed in an exemplary electronic device based on a user input.

Referring to FIG. 7, in a state 400, the electronic device 110 may receive a touch input 700 for a visual object 404 of a state 405. For example, the touch input 700 may be received to execute providing the second service with the external electronic device 120. For example, the touch input 700 may be received to transmit, to the external electronic device 120, information on the content in the electronic device 110.

Referring back to FIG. 6, in operation 605, the electronic device 110 may broadcast, through the first communication circuitry 230, a third advertising packet to request enabling the second service within the external electronic device 120, in response to the input. For example, the third advertising packet may be the first advertising packet indicating enabling the second service, in accordance with an implementation method. However, it is not limited thereto.

For example, the third advertising packet may be broadcasted based on the input.

For example, the third advertising packet may be broadcasted on a condition of receiving the input and identifying that the second service is disabled in the external electronic device 120. For example, the second service being disabled in the external electronic device 120 may be identified based on the other information received from the server, the information in the advertising packet for the first service, or the information in the second advertising packet.

For example, the third advertising packet may be broadcasted, based on the reception of the input, in a state that whether the second service is enabled or disabled in the external electronic device 120 is not identified by the electronic device 110. However, it is not limited thereto.

For example, the external electronic device 120 may receive the third advertising packet.

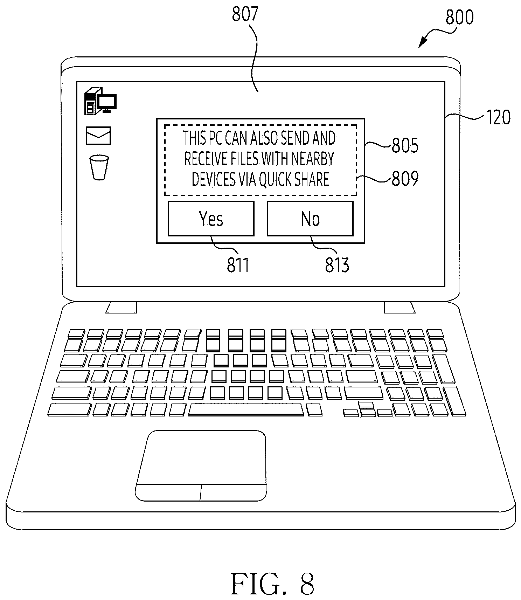

In operation 607, the external electronic device 120 may display a message based on the third advertising packet. For example, the third advertising packet may cause the external electronic device 120 to display the message for identifying whether to enable the second service through a display of the external electronic device 120. The message displayed based on the third advertising packet may be exemplified through FIG. 8.

FIG. 8 illustrates an example of a message displayed in an exemplary external electronic device.

Referring to FIG. 8, the external electronic device 120 may display a message 805, on a condition that the third advertising packet is received and the second service is disabled in the external electronic device 120, as in a state 800. For example, the message 805 may be superimposed on a screen 807 displayed through the display of the external electronic device 120. For example, the screen 807 may include a background screen. However, it is not limited thereto.

For example, the message 805 may include text 809 inquiring about whether to enable the second service. For example, the message 805 may include an executable object 811 indicating enabling the second service. For example, the message 805 may include an executable object 813 indicating disabling the second service.

For example, the external electronic device 120 may disable the second service in response to an input to the executable object 813. For example, the external electronic device 120 may broadcast an advertising packet indicating that the second service is disabled, in response to the input to the executable object 813 and/or the disabling of the second service. For example, the advertising packet may be the second advertising packet indicating the second service, which is disabled in the external electronic device 120, in accordance with an implementation method. However, it is not limited thereto.

For example, the external electronic device 120 may enable the second service in response to an input to the executable object 811. For example, although not illustrated in FIG. 6, the external electronic device 120 may broadcast an advertising packet indicating that the second service is enabled, in response to the input to the executable object 811 and/or the enabling of the second service. For example, the advertising packet may be the second advertising packet indicating the second service enabled in the external electronic device 120. However, it is not limited thereto.

For example, the electronic device 110 may receive the advertising packet indicating that the second service is enabled. For example, referring to FIG. 7, the electronic device 110 may change the state 400 to the state 450, based on the advertising packet. For example, the electronic device 110 may change the state 400 to the state 450, in response to identifying the second service enabled in the external electronic device 120 based on the advertising packet.

Referring back to FIG. 3, at least a portion of the various methods may be associated with a timing at which the second advertising packet is received. For example, the at least a portion of the various methods may be exemplified through FIG. 9.

FIG. 9 illustrates an example of an operation of an exemplary electronic device that identifies whether a second advertising packet is received during a reference time interval.

In operation 901, the electronic device 110 may broadcast the first advertising packet. For example, operation 901 may correspond to operation 309 of FIG. 3.

In operation 903, the electronic device 110 may identify whether the second advertising packet broadcasted in response to the first advertising packet is received during a reference time interval. For example, the electronic device 110 may identify whether the second advertising packet is received during the reference time interval from a timing at which the first advertising packet is broadcasted.

For example, the electronic device 110 may identify whether the second advertising packet is received during the reference time interval, in order to identify whether the second service is enabled or disabled in the external electronic device 120. For example, the electronic device 110 may recognize the second advertising packet being not received during the reference time interval as the second service being disabled in the external electronic device 120. However, it is not limited thereto.

For example, the electronic device 110 may execute operation 905 based on the second advertising packet received from the external electronic device 120 during the reference time interval. For example, the electronic device 110 may execute operation 907, on a condition that the second advertising packet is not received from the external electronic device 120 during the reference time interval.

In operation 905, the electronic device 110 may change the state of the visual object to the other state, based on identifying that the second advertising packet is received during the reference time interval. For example, operation 905 may correspond to operation 313 of FIG. 3.

In operation 907, the electronic device 110 may notify that the second service is in an unavailable state in the external electronic device 120, through the user interface of the software application for providing the second service, based on identifying that the reference time interval has elapsed in a state that the second advertising packet is not received.

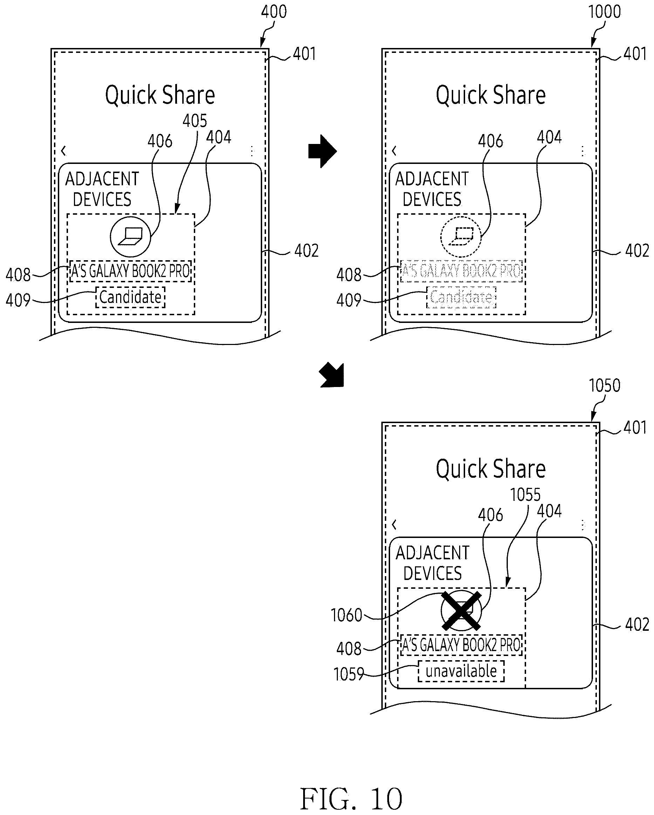

For example, the electronic device 110 may provide the notification through the user interface by ceasing displaying the visual object of the state. For example, the electronic device 110 may provide the notification through the user interface by changing the state of the visual object to a state indicating that the second service is unavailable in the external electronic device 120. The notification through the user interface may be exemplified through FIG. 10.

FIG. 10 illustrates an example of a change in displaying of a user interface displayed in an exemplary electronic device.

Referring to FIG. 10, in a state 400, the electronic device 110 may broadcast the first advertising packet and identify whether the second advertising packet broadcasted in response to the first advertising packet is received during the reference time interval.

For example, the electronic device 110 may change the state 400 to a state 1000, based on identifying that the reference time interval has elapsed in a state that the second advertising packet is not received. In the state 1000, the electronic device 110 may cease displaying the visual object 404 of the state 405. For example, the electronic device 110 may cause the visual object 404 of the state 405 to disappear in the user interface 401. For example, the electronic device 110 may remove the visual object 404 of the state 405 from the user interface 401. However, it is not limited thereto.

For example, the electronic device 110 may change the state 400 to a state 1050, based on identifying that the reference time interval has elapsed in a state that the second advertising packet is not received. In the state 1050, the electronic device 110 may display a user interface 401 including a visual object 404 of a state 1055, changed from the state 405, indicating that the second service is unavailable in the external electronic device 120.

For example, unlike the visual object 404 of the state 405, the visual object 404 of the state 1055 may include text 1059 indicating that the second service is unavailable. For example, text 409 may be replaced with text 1059 in accordance with a change from the state 405 to the state 1055.

For example, unlike the visual object 404 of the state 405, the visual object 404 of the state 1055 may further include a visual element 1060 indicating that the second service is unavailable. For example, the visual element 1060 may be replaced. For example, instead of including the visual element 1060, the visual object 404 of the state 1055 may be blurred. For example, instead of including the visual element 1060, the visual object 404 of the state 1055 may include a translucent layer at least partially superimposed on the visual object 404 of the state 1055. However, it is not limited thereto.

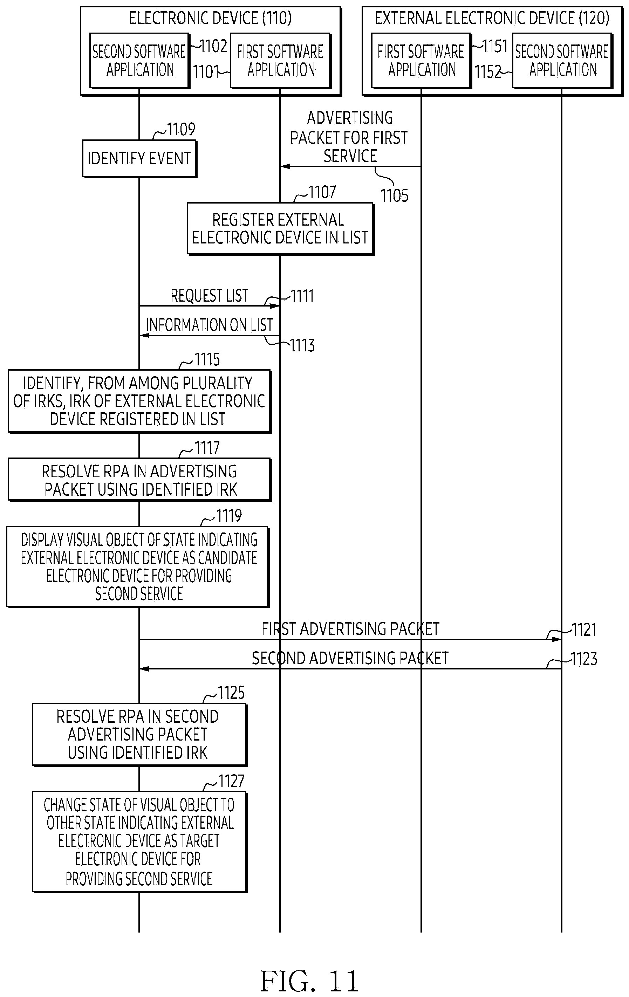

Referring back to FIG. 3, the electronic device 110 may store the software application for the first service and the software application for the second service. For example, the software application for the first service may be referred to as a first software application, and the software application for the second service may be referred to as a second software application. The first software application and the second software application may be stored in the external electronic device 120. It may be exemplified through FIG. 11 that each of the electronic device 110 and the external electronic device 120 executes at least a portion of the various methods through the first software application and the second software application.

FIG. 11 illustrates an example of an operation of an exemplary electronic device that processes an advertising packet broadcasted from an exemplary external electronic device using a first software application and a second software application.

Referring to FIG. 11, in operation 1105, the external electronic device 120 may broadcast the advertising packet for the first service through a first software application 1151 installed in the external electronic device 120. For example, the advertising packet for the first service may correspond to the advertising packet for the first service broadcasted in operation 303 of FIG. 3. For example, the electronic device 110 may receive the advertising packet for the first service through a first software application 1101 installed in the electronic device 110.

In operation 1107, the electronic device 110 may register the external electronic device 120 in a list managed through the first software application 1101, based on the advertising packet for the first service. For example, the electronic device 110 may register, in the list, the external electronic device 120 broadcasting the advertising packet for the first service, for the first service provided through the electronic device 110.

In operation 1109, the electronic device 110 may identify the event for initiating the second service through the second software application 1102. For example, operation 1109 may correspond to operation 301 of FIG. 3.

Operation 1109 may be executed after operation 1105 and operation 1107 are executed. Since operation 1109 is executed through the second software application 1102 unlike operation 1105 and operation 1107 executed through the first software application 1101, operation 1109 may be executed independently of executing operation 1105 and operation 1107. For example, at least a portion of operation 1109 may be executed in parallel with at least a portion of operation 1105 and/or operation 1107. However, it is not limited thereto.

In operation 1111, the electronic device 110 may request, through the second software application 1102, the list obtained through the first software application 1101 based on identifying the event. For example, the request may be provided from the second software application 1102 to the first software application 1101 through at least one application programming interface (API).

In operation 1113, the electronic device 110 may obtain information on the list through the first software application 1101 obtaining the request. For example, the obtaining of the information may be executed through the second software application 1102. For example, the information may indicate the list including the external electronic device 102 registered in operation 1107. For example, the information on the list may be provided from the first software application 1101 to the second software application 1102 through at least one application programming interface (API).

In operation 1115, the electronic device 110 may identify, through the second software application 1102, an IRK of the external electronic device 120 registered in the list from the first software application 1101 from among the plurality of IRKs exemplified through the description of FIG. 3.

In operation 1117, the electronic device 110 may resolve, through the second software application 1102, an RPA in the advertising packet received through the first software application 1101 in operation 1105 using the identified IRK. For example, the identified IRK and the RPA may correspond to the IRK and the RPA exemplified through FIG. 3, respectively.

In operation 1119, in response to the resolving, the electronic device 110 may display, in a user interface of the second software application 1102, through the second software application 1102, the visual object of the state indicating the external electronic device 120 as the candidate electronic device for providing the second service. For example, operation 1119 may correspond to operation 307 of FIG. 3.

In operation 1121, the electronic device 110 may broadcast the first advertising packet through the second software application 1102, based on the event identified through the second software application 1102 in operation 1109. For example, operation 1121 may correspond to operation 309 of FIG. 3. For example, the external electronic device 120 may receive the first advertising packet through the second software application 1152 installed in the external electronic device 120.

FIG. 11 illustrates an example in which operation 1121 is executed after operation 1119 is executed, but this is for convenience of explanation. Operation 1121 may be executed on a condition that operation 1109 is executed. For example, at least a portion of operation 1121 may be executed in parallel with at least a portion of operation 1115, operation 1117, and/or operation 1119. However, it is not limited thereto.

In operation 1123, the external electronic device 120 may broadcast the second advertising packet in response to the first advertising packet through the second software application 1152. The electronic device 110 may receive the second advertising packet through the second software application 1102. For example, operation 1123 may correspond to operation 311 of FIG. 3.

In operation 1125, the electronic device 110 may resolve, through the second software application 1102, the RPA in the second advertising packet using the IRK identified through operation 1115. For example, since the second advertising packet is an advertising packet broadcasted from the external electronic device 120, the RPA in the second advertising packet may be resolved using the IRK.

In operation 1127, in response to the resolving executed in operation 1125, the electronic device 110 may change, through the second software application 1102, the state of the visual object to the other state indicating the external electronic device 120 as a target electronic device for providing the second service. For example, operation 1127 may correspond to operation 313 of FIG. 3.

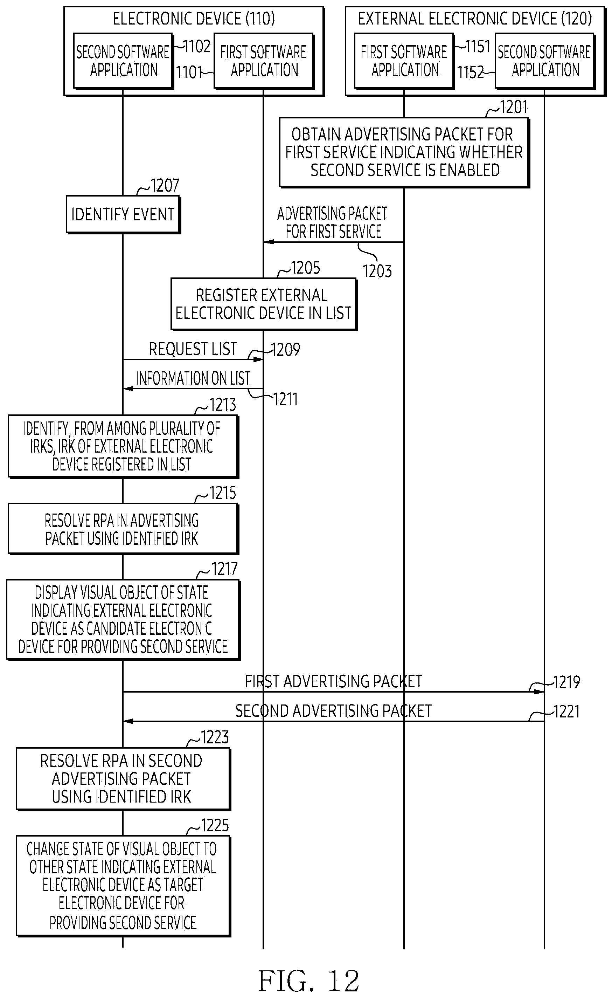

Referring back to FIG. 3, the first software application installed in the external electronic device 120 may obtain an advertising packet for the first service based on the second service provided through the second software application installed in the external electronic device 120. Obtaining the advertising packet for the first service in association with the second service through the second software application in the external electronic device 120 may be exemplified through FIG. 12.

FIG. 12 illustrates an example of an operation of an exemplary external electronic device that obtains an advertising packet for a service provided through a second software application using a first software application.

Referring to FIG. 12, in operation 1201, the external electronic device 120 may obtain, through a first software application 1151, the advertising packet for the first service indicating whether the second service is enabled in the external electronic device 120. Although not illustrated in FIG. 12, the external electronic device 120 may obtain, through a second software application 1152, before operation 1201 is executed, information indicating whether the second service is enabled in the external electronic device 120. For example, the information may be provided to the first software application 1151. For example, the external electronic device 120 may obtain, through the first software application 11511, the advertising packet for the first service based on the information.

For example, the external electronic device 120 may obtain the advertising packet for the first service through an API, based on a user input indicating linking the first service and the second service. For example, the advertising packet may indicate whether the second service is enabled, through a type in a service length type value (LTV) within a data area. However, it is not limited thereto.

In operation 1203, the external electronic device 120 may broadcast, through the first software application 1151, the advertising packet for the first service indicating whether the second service is enabled. For example, the electronic device 110 may receive the advertising packet for the first service through the first software application 1101.

In operation 1205, the electronic device 110 may register, through the first software application 1101, the external electronic device 120 in the list managed through the first software application 1101. For example, the electronic device 110 may register, through the first software application 1101, information indicating whether the second service is enabled in the external electronic device 120, as associated with the external electronic device 120 registered in the list.

In operation 1207, the electronic device 110 may identify, through the second software application 1102, the event for initiating the second service. For example, operation 1109 may correspond to operation 301 of FIG. 3.

Operation 1207 may be executed after operation 1201 to operation 1205 are executed. Since operation 1207 is executed through the second software application 1102 unlike operation 1201 to operation 1205 executed through the first software application 1101, operation 1207 may be executed independently of executing operation 1201 to operation 1205. For example, at least a portion of operation 1207 may be executed in parallel with at least a portion of operation 1201, operation 1203, and/or operation 1205. However, it is not limited thereto.

In operation 1209, the electronic device 110 may request, through the second software application 1102, the list obtained through the first software application 1101, based on identifying the event. For example, the request may be transmitted from the second software application 1102 to the first software application 1101 through at least one API.

In operation 1211, the electronic device 110 may obtain information on the list through the first software application 1101 obtaining the request. For example, the obtaining of the information may be executed through the second software application 1102. For example, the information may indicate the list including the external electronic device 120 registered in operation 1205. For example, the information may further indicate that the second service is enabled in the external electronic device 120. For example, the information may be transmitted from the first software application 1113 to the second software application 1102 through at least one API.

In operation 1213, the electronic device 110 may identify, through the second software application 1102, an IRK of the external electronic device 120 registered in the list from the first software application 1101 from among the plurality of IRKs.

In operation 1215, the electronic device 110 may resolve an RPA in the advertising packet received through the first software application 1101 in operation 1203 using the identified IRK through the second software application 1102. For example, the identified IRK and the RPA may correspond to the IRK and the RPA exemplified through FIG. 3, respectively.

In operation 1217, in response to the resolving, through the second software application 1102, the electronic device 110 may display, in a user interface of the second software application 1102, the visual object of the state indicating the external electronic device 120 as the candidate electronic device for providing the second service. For example, since the advertising packet received through the first software application 1101 from the external electronic device 120 indicates that the second service is enabled, the electronic device 110 may display the visual object in the state. For example, operation 1217 may be executed based on operation 1211 and operation 1215.

In operation 1219, the electronic device 110 may broadcast the first advertising packet through the second software application 1102, based on the event identified through the second software application 1102 in operation 1207. For example, operation 1121 may correspond to operation 309 of FIG. 3. For example, the external electronic device 120 may receive the first advertising packet through the second software application 1152 installed in the external electronic device 120.

FIG. 12 illustrates an example in which operation 1219 is executed after operation 1217 is executed, but this is for convenience of explanation. Operation 1219 may be executed on a condition that operation 1207 is executed. For example, at least a portion of operation 1219 may be executed in parallel with at least a portion of operation 1213, operation 1215, and/or operation 1217. However, it is not limited thereto.

In operation 1221, the external electronic device 120 may broadcast, through the second software application 1152, the second advertising packet in response to the first advertising packet. The electronic device 110 may receive the second advertising packet through the second software application 1102. For example, operation 1221 may correspond to operation 311 of FIG. 3.

In operation 1223, the electronic device 110 may resolve, through the second software application 1102, an RPA in the second advertising packet using the IRK identified through operation 1115. For example, since the second advertising packet is an advertising packet broadcasted from the external electronic device 120, the RPA in the second advertising packet may be resolved using the IRK.

In operation 1225, in response to the resolving executed in operation 1125, the electronic device 110 may change, through the second software application 1102, the state of the visual object to the other state indicating the external electronic device 120 as a target electronic device for providing the second service. For example, operation 1127 may correspond to operation 313 of FIG. 3.

Referring back to FIG. 3, although not illustrated in FIG. 3, the electronic device 110 may receive another advertising packet broadcasted from the external electronic device 120 (or another external electronic device). For example, advertising data in the other advertising packet may indicate that the other advertising packet is associated with the second service. For example, the electronic device 110 may display the visual object of the other state indicating the external electronic device 120 (or the other external electronic device) as the target electronic device for providing the second service with the electronic device 110, based on the advertising data.

As described above, the electronic device 110 may enhance responsiveness of the second service by obtaining information on the plurality of IRKs before the second service is initiated and processing an advertising packet for the first service distinct from the second service using the information.

FIG. 13 is a block diagram illustrating an electronic device 1301 in a network environment 1300 according to various embodiments. Referring to FIG. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module(SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to an embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, an HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to an embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 1364dB or less) for implementing mMTC, or U-plane latency (e.g., 0.5ms or less for each of downlink (DL) and uplink (UL), or a round trip of 13ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an intemet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

As described above, an electronic device 110 may comprise a display 220, communication circuitry 230 for Bluetooth low energy (BLE), and a processor 210. According to an embodiment, the processor 210 may be configured to, based at least in part on an event for initiating a second service, resolve a resolvable private address (RPA) in an advertising packet for a first service received through the communication circuitry 230, using an identity resolving key (IRK) from among a plurality of IRKs stored in the electronic device 110 before the event occurs. According to an embodiment, the processor 210 may be configured to, in response to the resolving, display, via the display 220, in a user interface (UI) for the second service, a visual object of a state, the state indicating an external electronic device 120 corresponding to the IRK as a candidate electronic device for providing the second service with the electronic device 110.

According to an embodiment, the visual object may be displayed via the display 220 before a second advertising packet, broadcasted from the external electronic device 120 in response to a first advertising packet broadcasted from the electronic device 110 for the second service, is received.

According to an embodiment, the processor 210 may be configured to, based on the event, broadcast, through the communication circuitry 230, a first advertising packet indicating the electronic device 110 for the second service. According to an embodiment, the processor 210 may be configured to, while the visual object of the state is displayed, receive, through the communication circuitry 230, a second advertising packet broadcasted in response to the first advertising packet.

According to an embodiment, the processor 210 may be configured to, based at least in part on the second advertising packet, change the state of the visual object to another state indicating the external electronic device 120 as a target electronic device for providing the second service with the electronic device 110.

According to an embodiment, the processor 210 may be configured to, in response to the second advertising packet, identify whether an RPA in the second advertising packet is resolved using the IRK. According to an embodiment, the processor 210 may be configured to, based at least in part on the RPA in the second advertising packet resolved using the IRK, change the state of the visual object to the other state.

According to an embodiment, the processor 210 may be configured to, based on the RPA in the second advertising packet not resolved using the IRK, refrain from changing the state of the visual object to the other state.

According to an embodiment, the processor 210 may be configured to, before the event occurs, receive, from a server device, first information regarding the plurality of IRKs and second information indicating whether the second service is enabled or disabled in each of a plurality of external electronic devices respectively corresponding to the plurality of IRKs. According to an embodiment, the processor 210 may be configured to, based on the second information indicating that the second service is enabled in the external electronic device 120 and the RPA in the second advertising packet resolved using the IRK, change the state of the visual object to the other state.

According to an embodiment, the advertising packet for the first service may include information indicating whether the second service is enabled or disabled in the external electronic device 120. According to an embodiment, the processor 210 may be configured to, based on the information indicating that the second service is enabled in the external electronic device 120 and the RPA in the second advertising packet resolved using the IRK, change the state of the visual object to the other state.

According to an embodiment, the processor 210 may be configured to, based on information in the second advertising packet indicating that the second service is enabled in the external electronic device 120 and the RPA in the second advertising packet resolved using the IRK, change the state of the visual object to the other state.

According to an embodiment, the processor 210 may be configured to, receive an input indicating to select the visual object of the state. According to an embodiment, the processor 210 may be configured to, in response to the input, broadcast, through the communication circuitry 230, a third advertising packet for requesting to enable the second service in the external electronic device 120. According to an embodiment, the third advertising packet received to the external electronic device 120 may cause the external electronic device 120 to display a message for identifying whether enabling the second service via a display of the external electronic device 120.

According to an embodiment, the processor 210 may be configured to, in response to receiving a packet indicating that the second service is enabled from the external electronic device 120, change the state of the visual object to another state indicating the external electronic device 120 as a target electronic device for providing the second service with the electronic device 110.

According to an embodiment, the processor 210 may be configured to identify whether the second advertising packet is received during a reference time interval. According to an embodiment, the processor 210 may be configured to, based on identifying that the second advertising packet is not received during the reference time interval, cease displaying the visual object of the state.

According to an embodiment, the processor 210 may be configured to identify whether the second advertising packet is received during a reference time interval. According to an embodiment, the processor 210 may be configured to, based on identifying that the second advertising packet is not received during the reference time interval, change the state of the visual object to a state indicating that the second service is unavailable in the external electronic device 120.

According to an embodiment, the processor 210 may be configured to, based on advertising data in the advertising packet, identify that the advertising packet is associated with the first service.

According to an embodiment, the processor 210 may be configured to receive another advertising packet broadcasted from the external electronic device 120. According to an embodiment, the processor 210 may be configured to, based on identifying that the other advertising packet is associated with the second service based on advertising data in the other advertising packet, display, via the display 220, in the UI, the visual object of another state indicating the external electronic device 120 to a target electronic device for providing the second service with the electronic device 110.

A method executed in an electronic device 110 comprising a display 220, and communication circuitry 230 for Bluetooth low energy (BLE) may comprise, based at least in part on an event for initiating a second service, resolving a resolvable private address (RPA) in an advertising packet for a first service received through the communication circuitry 230, using an identity resolving key (IRK) from among a plurality of IRKs stored in the electronic device 110 before the event occurs. The method may comprise, in response to the resolving, displaying, via the display 220, in a user interface (UI) for the second service, a visual object of a state, the state indicating an external electronic device 120 corresponding to the IRK as a candidate electronic device for providing the second service with the electronic device 110.

According to an embodiment, the method may comprise, based on the event, broadcasting, through the communication circuitry 230, a first advertising packet indicating the electronic device 110 for the second service. According to an embodiment, the method may comprise, while the visual object of the state is displayed, receiving, through the communication circuitry 230, a second advertising packet broadcasted in response to the first advertising packet.

According to an embodiment, the method may comprise, based at least in part on the second advertising packet, changing the state of the visual object to another state indicating the external electronic device 120 as a target electronic device for providing the second service with the electronic device 110.

As described above, a non-transitory computer readable storage medium may store one or more programs comprising instructions which, when executed by a processor 210 of an electronic device 110 including a display 220 and communication circuitry 230 for Bluetooth low energy (BLE), cause the electronic device 101 to, based at least in part on an event for initiating a second service, resolve a resolvable private address (RPA) in an advertising packet for a first service received through the communication circuitry 230, using an identity resolving key (IRK) from among a plurality of IRKs stored in the electronic device 110 before the event occurs. The one or more programs may comprise instructions which, when executed by the processor 210 of the electronic device 110, cause the electronic device 110 to, in response to the resolving, display, via the display 220, in a user interface (UI) for the second service, a visual object of a state, the state indicating an external electronic device 120 corresponding to the IRK as a candidate electronic device for providing the second service with the electronic device 110.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (110) comprising:
a display (220);
communication circuitry (230) for Bluetooth low energy (BLE); and
a processor (210) configured to:
based at least in part on an event for initiating a second service, resolve a resolvable private address (RPA) in an advertising packet for a first service received through the communication circuitry (230), using an identity resolving key (IRK) from among a plurality of IRKs stored in the electronic device (110) before the event occurs; and
in response to the resolving, display, via the display (220), in a user interface (UI) for the second service, a visual object of a state, the state indicating an external electronic device (120) corresponding to the IRK as a candidate electronic device for providing the second service with the electronic device (110).

2. The electronic device (110) of claim 1, wherein the visual object is displayed via the display (220) before a second advertising packet, broadcasted from the external electronic device (120) in response to a first advertising packet broadcasted from the electronic device (110) for the second service, is received.

3. The electronic device (110) of any one of the preceding claims, wherein the processor is further configured to:
based on the event, broadcast, through the communication circuitry (230), a first advertising packet indicating the electronic device (110) for the second service; and
while the visual object of the state is displayed, receive, through the communication circuitry (230), a second advertising packet broadcasted in response to the first advertising packet.

4. The electronic device (110) of any one of the preceding claims, wherein the processor is further configured to:
based at least in part on the second advertising packet, change the state of the visual object to another state indicating the external electronic device (120) as a target electronic device for providing the second service with the electronic device (110).

5. The electronic device (110) of any one of the preceding claims, wherein the processor is configured to:
in response to the second advertising packet, identify whether an RPA in the second advertising packet is resolved using the IRK; and
based at least in part on the RPA in the second advertising packet resolved using the IRK, change the state of the visual object to the other state.

6. The electronic device (110) of any one of the preceding claims, wherein the processor is further configured to:
based on the RPA in the second advertising packet not resolved using the IRK, refrain from changing the state of the visual object to the other state.

7. The electronic device (110) of any one of the preceding claims, wherein the processor is configured to:
before the event occurs, receive, from a server device, first information regarding the plurality of IRKs and second information indicating whether the second service is enabled or disabled in each of a plurality of external electronic devices respectively corresponding to the plurality of IRKs; and
based on the second information indicating that the second service is enabled in the external electronic device (120) and the RPA in the second advertising packet resolved using the IRK, change the state of the visual object to the other state.

8. The electronic device (110) of any one of the preceding claims, wherein the advertising packet for the first service includes information indicating whether the second service is enabled or disabled in the external electronic device (120), and
wherein the processor is configured to:
based on the information indicating that the second service is enabled in the external electronic device (120) and the RPA in the second advertising packet resolved using the IRK, change the state of the visual object to the other state.

9. The electronic device (110) of any one of the preceding claims, wherein the processor is configured to:
based on information in the second advertising packet indicating that the second service is enabled in the external electronic device (120) and the RPA in the second advertising packet resolved using the IRK change the state of the visual object to the other state.

10. The electronic device (110) of any one of the preceding claims, wherein the processor is further configured to:
receive an input indicating to select the visual object of the state; and
in response to the input, broadcast, through the communication circuitry (230), a third advertising packet for requesting to enable the second service in the external electronic device (120), and
wherein the third advertising packet received to the external electronic device (120) causes the external electronic device (120) to display a message for identifying whether enabling the second service via a display of the external electronic device (120).

11. The electronic device (110) of any one of the preceding claims, wherein the processor is further configured to:
in response to receiving a packet indicating that the second service is enabled from the external electronic device (120), change the state of the visual object to another state indicating the external electronic device (120) as a target electronic device for providing the second service with the electronic device (110).

12. The electronic device (110) of any one of the preceding claims, wherein the processor is further configured to:
identify whether the second advertising packet is received during a reference time interval; and
based on identifying that the second advertising packet is not received during the reference time interval, cease displaying the visual object of the state.

13. The electronic device (110) of any one of the preceding claims, wherein the processor is further configured to:
identify whether the second advertising packet is received during a reference time interval; and
based on identifying that the second advertising packet is not received during the reference time interval, change the state of the visual object to a state indicating that the second service is unavailable in the external electronic device (120).

14. The electronic device (110) of any one of the preceding claims, wherein the processor is further configured to:
based on advertising data in the advertising packet, identify that the advertising packet is associated with the first service.

15. The electronic device (110) of any one of the preceding claims, wherein the processor is further configured to:
receive another advertising packet broadcasted from the external electronic device (120); and
based on identifying that the other advertising packet is associated with the second service based on advertising data in the other advertising packet, display, via the display (220), in the UI, the visual object of another state indicating the external electronic device (120) to a target electronic device for providing the second service with the electronic device (110).
